Europäisches Patentamt

European Patent Office

Office européen des brevets

(11) Veröffentlichungsnummer: **0 222 391**

A1

(12) **EUROPÄISCHE PATENTANMELDUNG**

(21) Anmeldenummer: 86115718.8

(22) Anmeldetag: 12.11.86

(51) Int. Cl.⁴: **B60B 13/00** , B60B 7/00 , F16F 15/32

(30) Priorität: 13.11.85 DE 3540186
22.01.86 DE 3601838

(43) Veröffentlichungstag der Anmeldung:
20.05.87 Patentblatt 87/21

(84) Benannte Vertragsstaaten:
AT BE CH DE ES FR GB GR IT LI LU NL SE

(71) Anmelder: INTERNATIONAL TECHNICAL
RESEARCH S.A.H.
17, Rue Nicolas Martha
L-2133 Luxembourg(LU)

(72) Erfinder: Thissen, Werner P.
Weseler Strasse 1
D-4180 Goch 1(DE)
Erfinder: Schillings, Karl H.
Burfkamp 21
D-4180 Goch 6(DE)
Erfinder: Brauner, Hermann E.
Trift Strasse 133
D-4180 Goch 5(DE)

(74) Vertreter: Brehm, Hans-Peter, Dr. Dipl.-Chem.
et al
Patentanwälte Tischer, Kern & Brehm
Albert-Rosshaupter-Strasse 65
D-8000 München 70(DE)

(54) Ausgleichsgewicht-Befestigung an einem luftbereiften Fahrzeugrad.

(57) Bei einer Ausgleichsgewicht-Befestigung an einem luftbereiften Fahrzeugrad mit einem Luftreifen (25) mit zug-und druckfesten Kernen in den Reifenwülsten (27), ferner mit einer starren Felge (20), die radial nach innen ragende Felgenhörner (21) und daran angrenzend am Felgeninnenumfang Sitzflächen zur Anlage der Reifenwülste (27) aufweist, ferner mit je einem lösbaren Füllring (30) innerhalb eines von der Reifenwulstwand (28) und angrenzenden Felgenteilen (23, 24) begrenzten Montageraums dient als Befestigungsmittel zur Anbringung der Ausgleichsgewichte eine am Füllring (30) ausgesparte oder angeformte Nut (4). Innerhalb dieser Nut (4) lassen sich herkömmliche Ausgleichsgewichte (1,2) aus Blei, einer Bleilegierung oder dergleichen kraftschlüssig festlegen, die keine eigenständigen Befestigungsmittel aufweisen. Eine Abdeckung (70) verbirgt diese Nut (4) und die gegebenenfalls darin festgeklemmten Ausgleichsgewichte (1,2).

FIG. 6

## Ausgleichsgewicht-Befestigung an einem luftbereiften Fahrzeugrad

In allgemeiner Hinsicht betrifft die Erfindung die Befestigung von Ausgleichsgewichten an einem Fahrzeugrad, das mit einem Luftreifen ausgerüstet ist. Die Bezeichnung "Luftreifen" soll auch solche Reifen einschließen, die anstelle von Luft ein gasförmiges Druckmedium anderer Zusammensetzung enthalten. Insbesondere ist die Erfindung zum Auswuchten der Räder an Personenkraftwagen geeignet.

Mehr im einzelnen betrifft die Erfindung die Ausgleichsgewicht-Befestigung an einem luftbereiften Fahrzeugrad, mit einem Luftreifen mit zug-und druckfesten Kernen in den Reifenwülsten, ferner mit einer starren Felge, die radial nach innen ragende Felgenhörner und daran angrenzend am Felgeninnenumfang Sitzflächen zur Anlage der Reifenwülste aufweist, ferner mit je einem lösbaren Füllring innerhalb eines von der Reifenwulstwand und angrenzenden Felgenteilen begrenzten Montageraums, und mit Befestigungsmitteln am Füllring zur Anbringung von Ausgleichsgewichten.

Eine Ausgleichsgewicht-Befestigung dieser Art ist aus der Deutschen Offenlegungsschrift 32 37 544 bekannt. Nach dem bekannten Vorschlag befindet sich das Befestigungsmittel zum Anbringen von Ausgleichsgewichten bzw. Auswuchtgewichten an einem zusätzlichen Zierring, der mit Hilfe von Kunststoffdübeln oder auf andere Weise am Füllring befestigbar ist. Das Befestigungsmittel wird dabei von einer am Zierring umlaufenden Bördelung gebildet, welche im Querschnitt an ein herkömmliches, axial abstehendes Felgenhorn erinnert, an welcher Bördelung offensichtlich typische Ausgleichsgewichte aus Blei oder dergleichen mittels der dafür bekannten Halteklammern anschlagbar sind. Zum Anschlagen von Halteklammern für Ausgleichsgewichte muß dieser Zierring stabiler ausgebildet sein, als es seine "Zierfunktion" erfordert. Wie auch bei der herkömmlichen Ausgleichsgewicht-Befestigung sind die Ausgleichsgewichte sichtbar und die Anbringung und/oder ein Wechsel der Ausgleichsgewichte kann kaum ohne Beschädigung des Zierringes und/oder der Bördelung erfolgen.

Für ein analog aufgebautes Fahrzeugrad ist auch bereits ein angepaßtes Ausgleichsgewicht vorgeschlagen worden, das ein Verankerungselement aufweist, mit welchem es an der Übergangsstelle zwischen Reifenwulst und Füllring lösbar eintreibbar ist (vgl. DE-OS 33 12 482). Nachteilig ist der Zwang zu ganz bestimmt ausgebildeten Ausgleichsgewichten , die nur für diesen speziellen Felgentyp brauchbar sind. Auch erscheint das Einschlagen von Verankerungselementen in Form dübelförmiger Anker aus Metall unmittelbar angrenzend an den Reifenwulst nicht unproblematisch. Bei bestimmten Walkarbeiten des Reifens muß ein Herausrutschen der Verankerungselemente befürchtet werden, so daß die Ausgleichsgewichte verloren gehen.

Die Aufgabe der vorliegenden Erfindung besteht darin, die aus der DE-OS 32 37 544 bekannte Ausgleichsgewicht-Befestigung zu verbessern.

Insbesondere soll mit der vorliegenden Erfindung eine solche Ausgleichsgewicht-Befestigung bereitgestellt werden, welche Optik und Design der bekannten "Sicherheitsfelge" nicht stört, für herkömmliche, keine zusätzlichen Befestigungsmittel aufweisenden Ausgleichsgewichte geeignet ist und Schmutzablagerungen sicher vermeidet.

Nach einem weiteren Ziel der vorliegenden Erfindung sollen solche herkömmlichen, keine eigenständigen Befestigungsmittel aufweisenden Ausgleichsgewichte einerseits leicht anbringbar und/oder auswechselbar sein, um den Auswuchtvorgang zu beschleunigen, und andererseits sollen diese Ausgleichsgewichte sicher an der vorgesehenen Stelle gehalten werden; das letztere soll auch bei unüblicher Beanspruchung , etwa beim Kontakt des Rades mit einer Bordsteinkante oder unter Einwirkung von Bürsten in einer Waschanlage gewährleistet sein. Bekanntlich führen diese unüblichen Beanspruchungen häufig zum Verlust herkömmlich befestigter Ausgleichsgewichte.

Nach einem weiteren Ziel der vorliegenden Erfindung soll eine praktisch unsichtbare Ausgleichsgewicht-Befestigung geschaffen werden, die sich ohne weiteres an einer "umgekehrten Felge" mit nach in den Reifenhohlraum ragenden Felgenhörnern moderner Sicherheitsräder anbringen läßt.

Nach einem weiteren Ziel der vorliegenden Erfindung soll eine solche Ausgleichsgewicht-Befestigung vorzugsweise lediglich mit den notwendigen Bestandteilen eines solchen "Sicherheitsrades" ohne zusätzliche weitere Bestandteile auskommen.

Ausgehend von einer Ausgleichsgewicht-Befestigung an einem luftbereiften Fahrzeugrad, mit einem Luftreifen mit zug-und druckfesten Kernen in den Reifenwülsten, ferner mit einer starren Felge, die radial nach innen ragende Felgenhörner und daran angrenzend am Felgeninnenumfang Sitzflächen zur Anlage der Reifenwülste aufweist, ferner mit je einem lösbaren Füllring innerhalb eines von der Reifenwulstwand und angrenzenden Felgenteilen begrenzten Montageraums, und mit Befestigungsmitteln am Füllring zur Anbringung von Ausgleichsgewichten, ist die erfindungsgemäße Lösung dieser Aufgabe und Ziele dadurch gekennzeich net, daß als Befestigungsmittel eine am Füllring ausgesparte oder angeformte Nut zur Aufnahme herkömmlicher Ausgleichgewichte aus Blei, einer Bleilegierung oder dergleichen dient, und eine Abdeckung für diese Nut vorhanden ist.

Bei einem Sicherheitsrad der hier betrachteten Art ist notwendigerweise ein Füllring vorhanden, um den Montageraum zwischen Felgenschüssel - (oder vertikaler Seitenwand) und Felgenkranz am Felgenbett sowie der Seitenwand des Reifenwulstes auszufüllen. Nach einem wesentlichen Gesichtspunkt der Erfindung ist an diesem Füllring eine Nut vorgesehen, in welcher herkömmliche Ausgleichgewichte ohne zusätzliche Befestigungsmittel festlegbar sind. Im wesentlichen erfolgt das Festklemmen der Ausgleichgewichte durch elastische Verformung des die Nut begrenzenden Materials am Füllring oder durch eine elastische Einlage innerhalb dieses Füllrings.

Nach einem weiteren wesentlichen Gesichtspunkt der Erfindung ist zusätzlich eine Abdeckung vorhanden, welche die Nut und die gegebenenfalls darin befindlichen Ausgleichgewichte verbirgt. Damit wird erfindungsgemäß eine "unsichtbare" Ausgleichgewichts-Befestigung geschaffen, welche den optischen Eindruck der Felge nicht beeinträchtigt. Ferner sind die Ausgleichgewichte vor einer unbeabsichtigten Entfernung (Kontakt des Reifens mit einem Bordstein, Waschbürsten einer Waschanlage oder dergleichen) geschützt.

Nach einer vorteilhaften Ausgestaltung der Erfindung kann der Füllring teilweise eingeschnitten sein, wobei ein weiterhin mit dem restlichen Füllringabschnitt einstückig verbundenes, jedoch aufklappbares Deckelteil geschaffen wird. Die zu diesem Deckelteil hin offene Nut zur Aufnahme der Ausgleichgewichte ist in diesem Füllringabschnitt ausgespart und das am Füllringabschnitt anlegbare Deckelteil dient als Abdeckung für die Nut und die gegebenenfalls darin befindlichen Ausgleichgewichte.

Für diese Ausführungsform einer erfindungsgemäßen Ausgleichgewicht-Befestigung muß lediglich der ohnehin vorhandene Füllring in bestimmter Weise abgeändert und modifiziert werden, ohne daß ein weiterer, zusätzlicher, unabhängig handbarer Bestandteil für die Abdeckung benötigt wird. Dies bringt erhebliche Einsparungen hinsichtlich der Vorratshaltung und Logistik. Auch der so modifizierte Füllring kann weiterhin die gestellten Anforderungen erfüllen, einschließlich einer Abstützung des Reifenwulstes gegenüber der Felgenschüssel (oder einer vertikalen Seitenwand des Felgenbettes), um bei bestimmter Reifenbelastung ein Verschieben oder gar Ablösen des Reifenwulstes von seiner Sitzfläche an der Felge zu verhindern.

Ein weiterer Gesichtspunkt der vorliegenden Erfindung betrifft die Bereitstellung eines solchen Füllringes (vgl. Ansprüche 21 und 22).

Weitere vorteilhafte Ausgestaltungen und Weiterbildungen der Erfindung betreffen insbesondere die Ausbildung der Nut am Füllring, Einzelheiten der Ausbildung der Abdeckung und eine weitere Alternative, wobei in eine Aussparung am Füllring ein Profilkörper eingelegt ist, an dem die Nut ausgespart ist, wie das aus den Unteransprüchen ersichtlich ist.

Nach einem weiteren Gesichtspunkt der Erfindung kann insbesondere der Abdeckring aus Metall oder aus metallisiertem Kunststoff bestehen und mit seiner Größe und/oder Gestalt zum Felgendesign beitragen, um das Aussehen dieser Spezialfelge an das Aussehen herkömmlicher Felgen, insbesondere herkömmlicher Zierfelgen anzunähern. Ein solcher Abdeckring verdeckt nicht nur den Füllring und die in einer solchen Nut gegebenenfalls untergebrachten Ausgleichgewichte, sondern mit einem solchen Abdeckring kann in erheblichem Umfang das Design und der optische Eindruck der Felge beeinflußt werden.

Ferner ist dadurch eine glattflächigere Oberflächenkontur der Felgenaußenseite realisierbar, die dem heutigen Be streben nach cW-Wert-Optimierung entgegenkommt. Die sichtbare Rückseite der Abdeckung bildet eine Sichtblende, die vom Material und/oder von der Optik her in das Design der Radfelge integriert sein kann. Die von einer solchen Sichtblende verdeckten Ausgleichgewichte können ohne jegliche· Beschädigung der Felge einfach und schnell innerhalb der Nut im Füllring festgeklemmt und bei Bedarf ausgewechselt werden. Das Auswuchten ist mit herkömmlichen Ausgleichgewichten möglich, die keine eigenständigen Befestigungsmittel aufweisen. Die Erfindung beschleunigt den Auswuchtvorgang, weil das Einsetzen der Ausgleichgewichte und die in der Praxis häufige Lagekorrektur schneller erfolgen kann und eine zusätzliche Befestigung der Ausgleichgewichte nicht länger erforderlich ist. Somit erlaubt die Erfindung eine einfache, schnelle, sichere und praktisch unsichtbare Befestigung der Ausgleichgewichte an einem modernen Sicherheitsrad mit verbesserten Notlaufeigenschaften, bei welchem keine Felgenhörner zur Anbringung der Ausgleichgewichte zur Verfügung stehen.

Ohne daß damit eine Beschränkung verbunden sein soll, wird die Erfindung nachstehend mehr im einzelnen anhand bevorzugter Ausführungsformen mit Bezugnahme auf die Zeichnungen erläutert; die letzteren zeigen:

Fig. 1a, 1b und 1c verschiedene Ausführungsformen bekannter Sicherheitsräder mit einem Füllring im Montageraum zwischen Felgenteilen und Reifenwulst,

Fig. 2a, 2b und 2c einen erfindungsgemäß modifizierten Füllring, der mit einer Nut zur Aufnahme von Ausgleichgewichten versehen ist;

Fig. 3a und 3b den Querschnitt typischer Ausgleichsgewichte;

Fig. 4a und 4b ausschnittsweise Schnittdarstellungen von Füllringen mit einer an die Ausgleichsgewichte nach Fig. 3a bzw. 3b angepaßten Nut;

Fig. 5a, 5b Schnittdarstellungen einer weiteren alternativen Ausführungsform, wobei ein zusätzlicher, die Nut zur Aufnahme der Ausgleichsgewichte begrenzender Profilkörper in eine Aussparung am ausschnittsweise dargestellten Füllring eingesetzt ist;

Fig. 6 eine erste Ausführungsform einer erfindungsgemäßen Ausgleichsgewicht-Befestigung an einem schematisch im Schnitt dargestellten Sicherheitsrad;

Fig. 7 eine Abwandlung der Ausgleichsgewicht-Befestigung nach Fig. 6 mit einem Füllring mit im wesentlichen dreieckigen Querschnitt;

Fig. 8 die Halterung eines Abdeckringes mittels als Federbügel ausgebildeter Klemmelemente;

Fig. 9a und 9b weitere Alternativen der Klemmelemente zur Halterung eines Abdeckringes; und

Fig. 10 die Halterung eines Abdeckringes mittels an den Ring angeformter Klemmkörper.

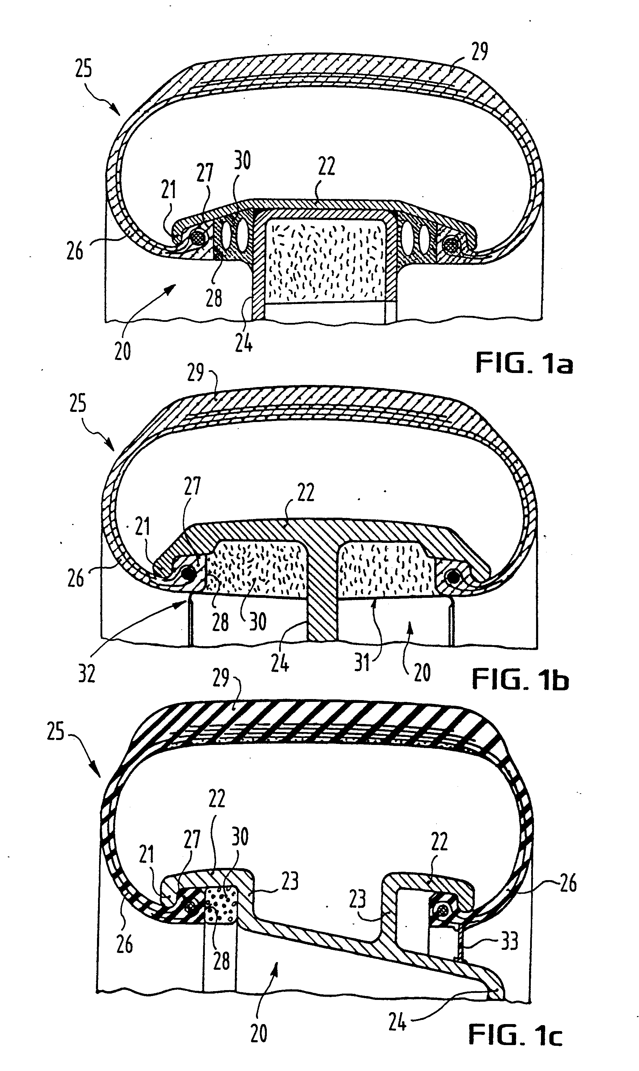

Mit den Fig. 1a, 1b und 1c sind verschiedene Ausführungsformen bekannter Felgen 20 für Luftreifen mit verbesserten Notlaufeigenschaften - sogen. "Sicherheitsräder" -dargestellt. Im Gegensatz zu den herkömmlichen Radfelgen wird hier das sich radial nach innen erstreckende Felgenhorn 21 von der Flanke 26 eines Luftreifens 25 umgriffen. Das Felgenhorn 21 befindet sich innerhalb des vom Luftreifen 25 umschlossenen Hohlraums und steht nicht zur Anbringung von Ausgleichsgewichten zur Verfügung. Derartige Sicherheitsräder weisen verbesserte Notlaufeigenschaften auf, weil in einem Notfall nach Entweichen von Luft die Innenwand des Reifengürtels 29 an Sitzflächen des Felgenkranzes oder Felgenbettes 22 abgestützt werden kann.

Der Reifenwulst 27 mit dem druck-und zugfesten Kern liegt an Sitzflächen an, die sich am Innenumfang des Felgenkranzes 22 in radialer Richtung nach innen an das Felgenhorn 21 angrenzend befinden. Zur Erleichterung der Montage wird ein Montageraum vorgesehen, der einerseits von der freiliegenden Wand 28 des Reifenwulstes 27 und andererseits von Felgenteilen, nämlich einem weiteren Abschnitt des Felgenkranzes 22 und einer vertikalen Seitenwand 23 oder der ebenfalls vertikal ausgerichteten Felgenschüssel 24 umschlossen wird. Innerhalb dieses Montageraums befindet sich ein Füllring 30, der nach Aufziehen des Luftreifens 25 auf die Sicherheitsfelge 20 in den dann freien Montageraum eingesetzt wird. Der Füllring kann nach dem Stand der Technik beispielsweise aus Hartschaum oder aus einem Hohlkammerprofil bestehen, oder es kann ein Füllring vorgesehen werden, der eine Ummantelungsschicht aus Gummi um einen inneren Hohlkern aus Federstahl aufweist. Der Füllring 30 hat die Aufgabe, das Eindringen und Ansammeln von Wasser und Schmutz im Montageraum zu verhindern, und den Reifenwulst 27 auch gegenüber der Felgenschüssel 24 oder der vertikalen Seitenwand 23 eines Felgenbettes abzustützen, um eine Entfernung des Reifenwulstes 27 von seiner Sitzfläche am Felgenkranz 22 bei bestimmten Reifenbelastungen sicher zu verhindern.

Bei der bekannten Ausführungsform eines solchen Sicherheitsrades (vgl. DE-OS 33 12 482) nach Fig. 1a besteht die Felgenschüssel 24 aus einem U-förmigen Topf, an welchem der Felgenkranz 22 angeschweißt ist. Der Füllring 30 besteht aus einem Hohlkammerprofil.

Das ebenfalls bekannte Sicherheitsrad (vgl. DE-OS 32 37 544) nach Fig. 1b weist eine gegossene Felge 20 mit einer mittig angebrachten Felgenschüssel 24 auf. Die beiden Füllringe 30 bestehen aus Hartschaum und sind radial innen mit je einem Zierring 31 versehen. Zur Anbringung von Ausgleichsgewichten befindet sich an diesem Zierring eine Bördelung 32 , die an das Felgenhorn einer herkömmlichen Felge erinnert.

Bei dem ebenfalls bekannten Sicherheitsrad - (vgl. DE-OS 33 36 239) nach Fig. 1c ist die Felgenschüssel 24 seitlich angeordnet und jeder Montageraum wird vom Felgenkranz 22 eines Hochbettes und einer vertikalen Seitenwand 23 begrenzt. Der auf der rechten Seite dargestellte Montageraum ist zusätzlich von einem Abdeckelement 33 umschlossen, das etwa auf der Höhe des rechten Felgenhorns 21 angeordnet ist und an seinen beiden Umfangsflächen zwischen Reifenflanke 26 und Tiefbett der Felge durch Klemmung befestigt ist.

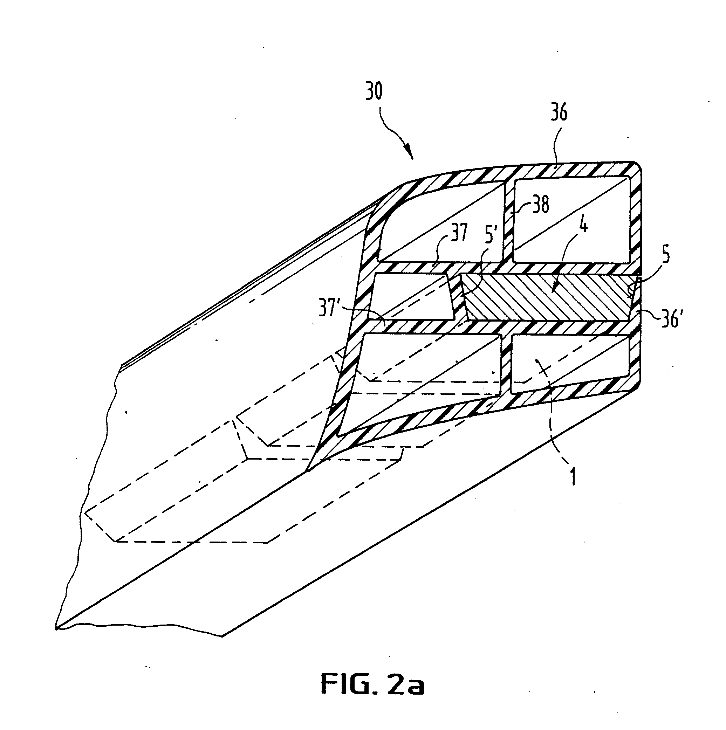

Die Fig. 2a zeigt schematisch eine bevorzugte Ausführungsform eines erfindungsgemäß modifizierten Füllringes 30. Dieser Füllring 30 besteht aus einem Hohlkammerprofil mit der Umfangswand 36, den beiden Querstegen 37, 37' und einem Längssteg 38. Ein solches Hohlkammerprofil kann einfach in endlosem Strang aus Kunststoff gespritzt werden. Der Strang wird zu Stücken passender Länge zurechtgeschnitten, diese Stücke zu einem Ring geformt, und der Ring über eine Schweißverbindung oder dergleichen geschlossen. Zwischen die beiden Querstege 37 und 37' sind - schräg gestellte Wandabschnitte eingesetzt, welche die Flanken 5 und 5' einer Nut 4 bilden.

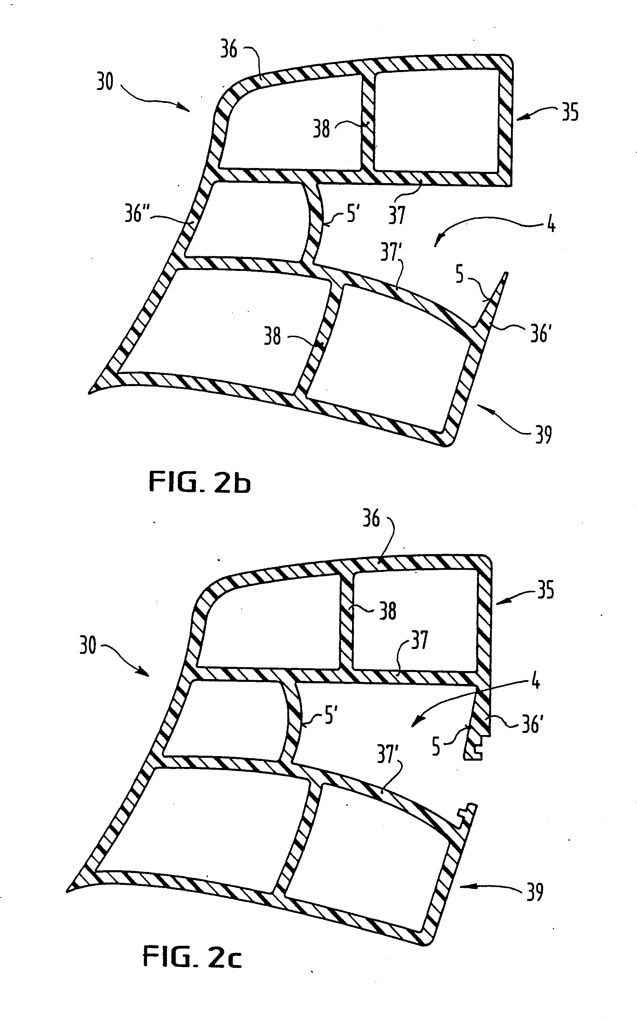

In einem (in der gewählten Darstellung rechts befindlichen) Abschnitt 36' der Umfangswand 36 befindet sich zwischen den beiden Querstegen 37 und 37' ein Einschnitt. Dank dieses Einschnittes kann der (in der Zeichnung) untere Abschnitt des Hohlkammerprofils nach unten aufgeklappt werden, wie das schematisch in Fig. 2b dargestellt ist. Es resultiert ein oberer -in Einbaulage an einer Felge 20 -weiterhin am Felgenkranz 22 anliegender Füll ringabschnitt 35 und ein unteres, aufklappbares Deckelteil 39. Durch entsprechend weites Aufklappen wird der Einschnitt ausreichend aufgeweitet, damit durch die entstehende Öffnung hindurch ein Ausgleichsgewicht 1 in die Nut 4 eingelegt werden kann. Vor allem die Elastizität der inneren Nutflanke 5' zieht das Deckelteil 39 nach Beendigung der das Aufklappen verursachenden Krafteinwirkung wieder in die Ausgangslage zurück, und das Ausgleichsgewicht 1 befindet sich dann rutschfest an der zum Auswuchten erforderlichen Stelle innerhalb der Nut 4 im Füllring 30. Bei Bedarf kann der zum Wandabschnitt 5' benachbarte Abschnitt 36" der Umfangswand 36 verstärkt ausgebildet sein und im Sinne eines Scharniers das Auf-und Zuklappen des Deckteils 39 unterstützen.

Nach einer weiteren, alternativen Ausgestaltung eines solchen, als Hohlkammerprofil ausgebildeten Füllringes 30 (vgl. Fig. 2c) kann sich der Einschnitt im Abschnitt 36' der Umfangswand 36 benachbart zum unteren Quersteg 37' befinden. In diesem Falle verbleibt nach dem Aufklappen des Deckelteils 39 dieser Umfangswand-Abschnitt 36' am - in Einbaulage an der Felge 20 -ortsfesten Füllringabschnitt 35. Ersichtlich weist dann dieser Füllringabschnitt 35 eine zum Deckelteil 39 hin offene Nut 4 auf, in welche die Ausgleichsgewichte einbringbar sind. Benachbart zum unteren Quersteg 37' kann an der Umfangswand 36 ein umlaufendes Rastelement angeformt sein, das nach erneutem Schließen des Füllringes 30 in eine passende umlaufende Ausnehmung am unteren Ende des Umfangswand-Abschnittes 36' einrasten kann.

In der in Fig. 2a, 2b und 2c gewählten Darstellung liegt der Füllring 30 in Einbaulage mit dem oben befindlichen Abschnitt der Umfangswand 36 am Felgenkranz 22 einer Sicherheitsfelge 20 an. Der links befindliche Abschnitt 36" der Umfangswand 36 liegt an der Seitenwand 28 des Reifenwulstes 27 an, und das unten befindliche Deckelteil 39 bildet eine Abdeckung für die Nut 4 am Füllring 30 und und die gegebenenfalls darin befindlichen Ausgleichsgewichte 1.

Zur Erhöhung des rutschfesten Sitzes des Füllringes 30 an der Sicherheitsfelge 20 kann wenigstens eine der Anlageflächen des Füllringes 30 aufgerauht sein. Alternativ kann eine angepaßte Verzahnung an gegenüberliegenden Flächen der Felge 20 und des Füllringes 30 vorgesehen sein. Ein rutschfester Sitz ist wünschenswert, damit der Füllring und die in dessen Nut 4 gegebenenfalls eingeklemmten Ausgleichsgewichte die zum Auswuchten vorgesehene Anordnung an der Felge 20 dauerhaft beibehalten.

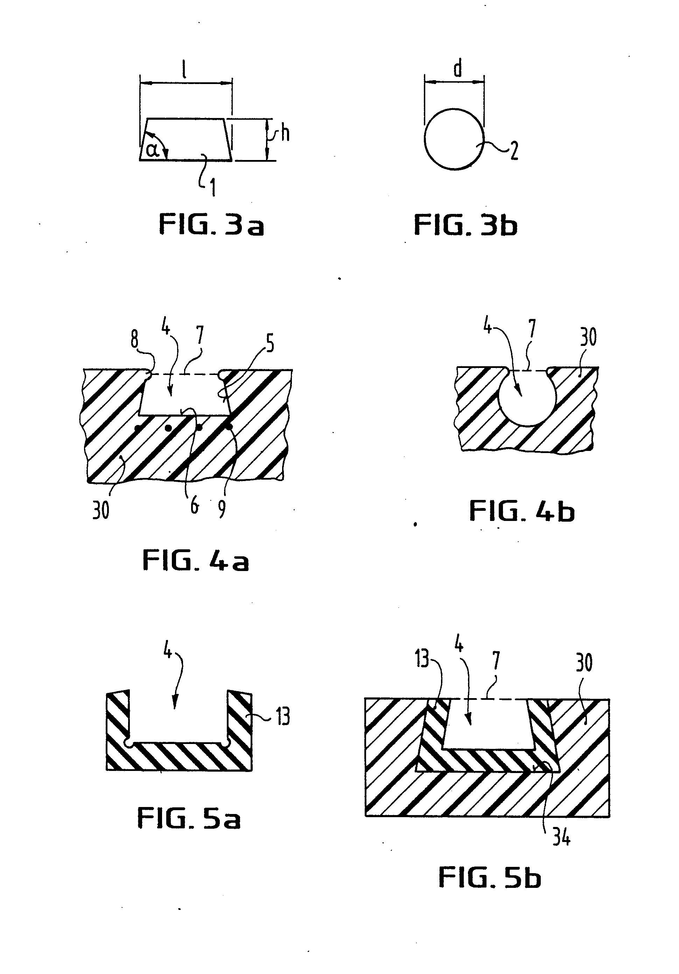

Typische, handelsüblich zugängliche Ausgleichsgewichte bestehen aus Blei oder einer Bleilegierung und weisen den in Fig. 3a dargestellten Querschnitt auf. Das Ausgleichsgewicht 1 hat einen im wesentlichen trapezförmigen Querschnitt mit einer Höhe "h" von etwa 2 bis 5 mm und mit einer mittleren Länge "1" von etwa 7 bis 100 mm. Der Winkel $\alpha$ beträgt zumeist etwa 45 bis 75 Grad.

Weiterhin sind Ausgleichsgewichte 2 mit im wesentlichen kreisrundem Querschnitt geeignet, wie sie mit Fig. 3b dargestellt sind. Der Durchmesser "d" beträgt zumeist etwa 8 bis 15 mm.

Die unterschiedlichen Gewichte von etwa 5 bis 70 g derartiger Ausgleichsgewichte resultieren vor allem aus der Längenvariation.

Nach einem wesentlichen Gesichtspunkt der Erfindung sollen zur Auswuchtung eines Sicherheitsrades derartige Ausgleichsgewichte dienen, die keine eigenständigen Befestigungsmittel aufweisen. Hierzu werden die Ausgleichsgewichte 1,2 in einer Nut 4 festgeklemmt, die an einem Füllring 30 vorgesehen ist. Diese Nut 4 kann unmittelbar aus dem vollen Füllringmaterial (beispielsweise Hartschaum) ausgespart sein, oder sie kann zusätzlich am Hohlkammer profil eines bestimmten Füllrings angeformt sein. Nach einer weiteren Alternative kann die Nut innerhalb eines Profilkörpers 13 (vgl. Fig. 5a, 5b) ausgespart sein, der seinerseits in eine angepaßte Aussparung 34 am Füllring 30 einsetzbar ist. Die Abmessungen des Querschnitts der Nut 4 sind geringfügig kleiner als die entsprechenden Abmessungen angepaßter Ausgleichsgewichte, um die letzteren im Klemmsitz innerhalb der Nut 4 festzuhalten. Die Ausgleichsgewichte 1,2 sollen vorzugsweise im wesentlichen vollständig innerhalb der Nut 4 unterbringbar sein.

Wie dargestellt, weist die Nut 4 am Füllring 30 vorzugsweise einen Querschnitt auf, welcher sich in Richtung auf die Nutöffnung 7 zu verjüngt. Hierzu können eine oder beide Nutflanken 5 unter einem Winkel zu einer Senkrechten auf den Nutboden 6 verlaufen. Wie dargestellt, kann dieser Nutquerschnitt beispielsweise schwalbenschwanzförmig oder trapezförmig (vgl. Fig. 4a) sein oder einem angeschnittenen Kreis entsprechen (vgl. Fig. 4b). Die Nutöffnung 7 kann zusätzlich durch einen oder mehrere dort angebrachte Wülste 8 verengt sein. Bei Bedarf können in den Füllring 30 Verstärkungs- oder Versteifungsmittel eingearbeitet sein, beispielsweise in Form von Drähten 9 im Bereich des Nutbodens 6.

Die Fig. 5a zeigt einen isolierten Profilkörper 13, der eine zur Aufnahme von Ausgleichsgewichten bestimmte Nut 4 begrenzt. Dieser Profilkörper 13 mit beispielsweise im wesentlichen rechteckförmiger Nut 4 kann unter Verformung 80 in eine angepaßte, an einem Füllring 30 ausgesparte oder angeformte Aussparung 34 eingesetzt werden, deren Flanken schräg gestellt sein können (vgl. Fig. 5b). Diese Alternative erlaubt es, für den Profilkörper 13 ein vergleichsweise weiches, elastisch verformbares Material vorzusehen, während der Füllring 30 selbst aus einem vergleichsweise harten, wenig komprimierbaren Material besteht, das die Abstützung des Reifenwulstes gegenüber der Felgen schüssel bei bestimmten Reifenbelastungen gewährleistet.

Zum Auswuchten werden ein oder mehrere Ausgleichs-oder Auswuchtgewichte 1, 2 unter elastischer Verformung des Füllring-oder des Profilkörper-Materials in die von diesem Material begrenzte Nut 4 eingesetzt. Die Rückstellkraft des Materials hält das Auswuchtgewicht 1,2 dauerhaft, fest und rutschsicher an der gewünschten Stelle.

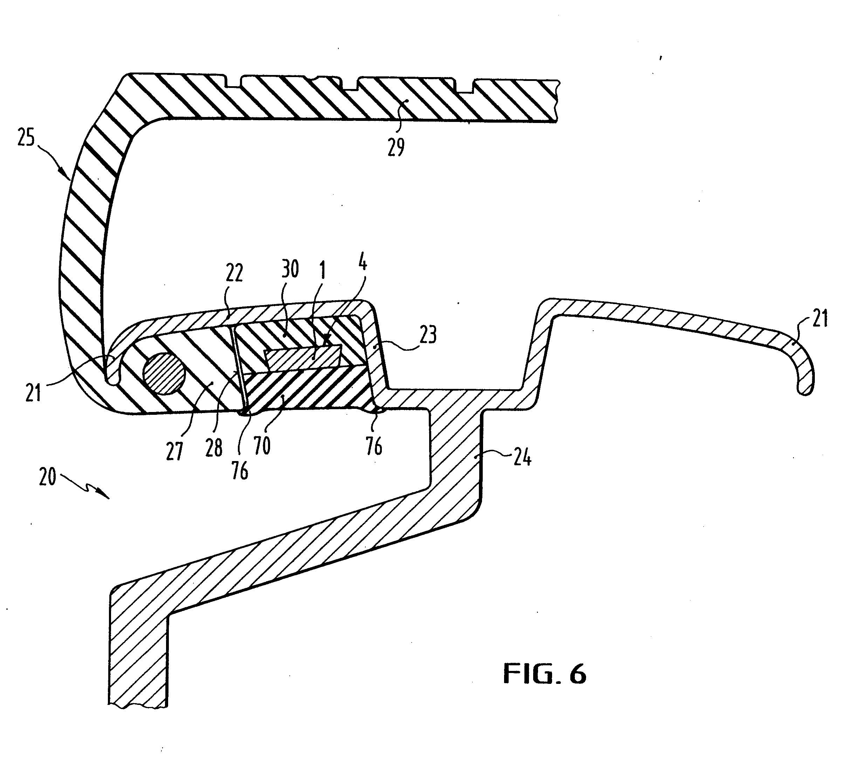

Die Fig. 6 zeigt eine Ausführungsform einer erfindungsgemäßen Ausgleichsgewicht-Befestigung an einer Felge 20 eines Sicherheitsrades, das oben im einzelnen mit Bezugnahme auf die Fig. 1a, 1b und 1c beschrieben wurde. Wie dargestellt, handelt es sich bei dieser Felge 20 um eine sogenannte "umgekehrte Felge", bei welcher sich die Felgenhörner 21 radial nach innen erstrecken und vom Wulst 27 eines Luftreifens 25 umgriffen werden. Ein solches Sicherheitsrad weist bessere Notlaufeigenschaften auf, weil sich der Reifengürtel 29 im Notfall an Sitzflächen des Felgenbettes bzw. Felgenkranzes 22 anlegen und abstützen kann. Aus Montagegründen kann der Reifenwulst 27 nicht unmittelbar an der vertikalen Seitenwand 23 des Felgenbettes (oder bei anderen Felgenformen an der Felgenschüssel 24) anliegen. Es verbleibt ein im wesentlichen U-förmiger Montageraum, der von der vorzugsweise ebenen Wandfläche 28 des Reifenwulstes 27, vom Felgenkranz 22 und von der vertikalen Seitenwand 23 des Felgenbettes begrenzt ist. Innerhalb dieses Montageraums befindet sich ein Füllring 30 und ein Abdeckstreifen bzw. Abdeckring 70.

Der Füllring 30 ist erfindungsgemäß modifiziert und weist eine Nut 4 zur Aufnahme von Ausgleichsgewichten 1 auf. Je nach Abmessungen der Felge 20 kann der Füllring 30 beispielsweise rechteckigen Querschnitt mit einer Breite von etwa 10 bis 50 mm und einer Stärke von etwa 10 bis 50 mm aufweisen.

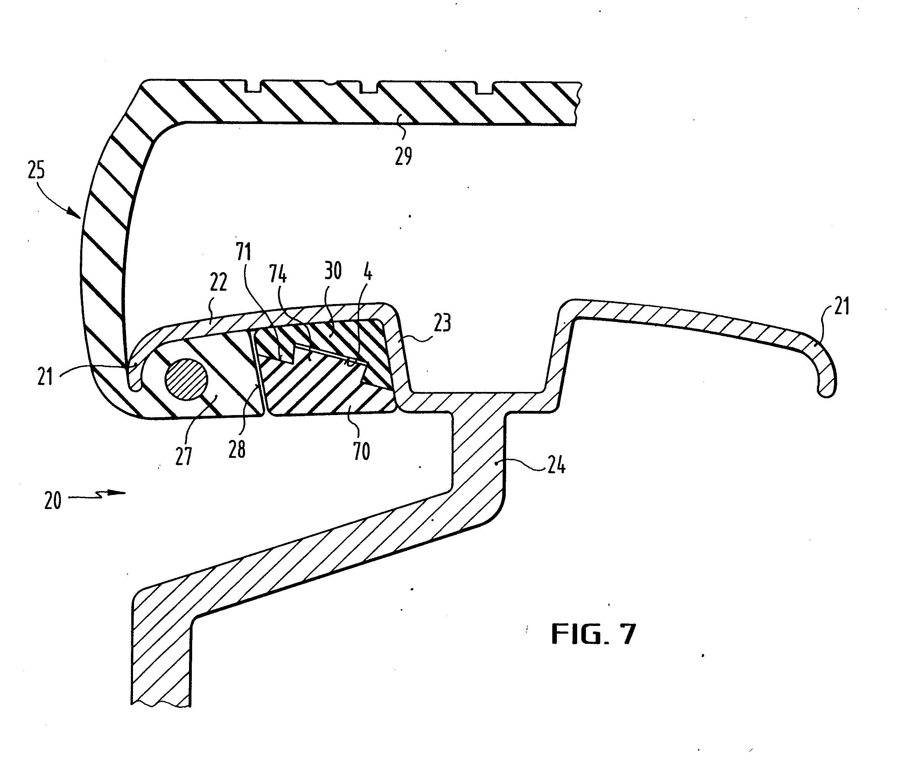

Die Fig. 7 zeigt eine alternative Ausführungsform des Füllringes 30, der ebenfalls in dem Montageraum an einer "umgekehrten Felge" 20 für ein Sicherheitsrad angeordnet ist.

Wie dargestellt, weist dieser Profilkörper 3 im wesentlichen dreieckigen Querschnitt auf, wobei sich die Nut 4 zur Hypothenuse hin öffnet. Die dadurch resultierende Schrägstellung der Auswuchtebene im umlaufenden Füllring 30 vereinfacht die Montage der Auswuchtgewichte noch weiter.

Bei den beispielhaften, mit Bezugnahme auf die Fig. 6 und 7 erläuterten Ausgleichsgewicht-Befestigungen füllt der mit der Nut 4 versehene Füllring 30 den Montageraum nur teilweise aus, und ein Abdeckstreifen oder Abdeckring 70 ist zumindest mit Teilen seines Querschnitts ebenfalls innerhalb des Montageraums angeordnet. Wie dargestellt, füllt der Füllring 30 den Montageraum nicht völlig aus, so daß ein restlicher Hohlraum verbleibt. Der Abdeckstreifen 70 hat vorzugsweise solche Abmessungen, daß er diesen restlichen Hohlraum ausfüllt. Im Falle eines Füllkörpers 30 mit im wesentlichen dreieckigem Querschnitt (vgl. Fig. 7) weist der Abdeckstreifen 70 ein angepaßtes Querschnittsprofil auf, so daß der Füllring 30 und der Abdeckstreifen 70 zusammengenommen den Montageraum ausfüllen.

Zur Halterung kann sich der Abdeckstreifen 70 mit seinen Seitenabschnitten an der Innenwand des Montageraums abstützen. Vorzugsweise sind jedoch an der Innenseite 71 des Abdeckstreifens 70 Klemmelemente, insbesondere elastisch komprimierbare Formkörper 74 angebracht oder angeformt, welche in die Nut 4 innerhalb des Füllrings 30 einzugreifen vermögen und aufgrund des erzielten Kraftschlusses den Abdeckstreifen 70 sicher in der Anlage am Füllring 30 halten.

Alternativ kann in den Montageraum an der Sicherheitsfelge nach den Fig. 6 bzw. 7 ein aufklappbarer Füllring 30 eingesetzt werden, wie er oben mit Bezugnahme auf die Fig. 2a, 2b oder 2c erläutert wurde.

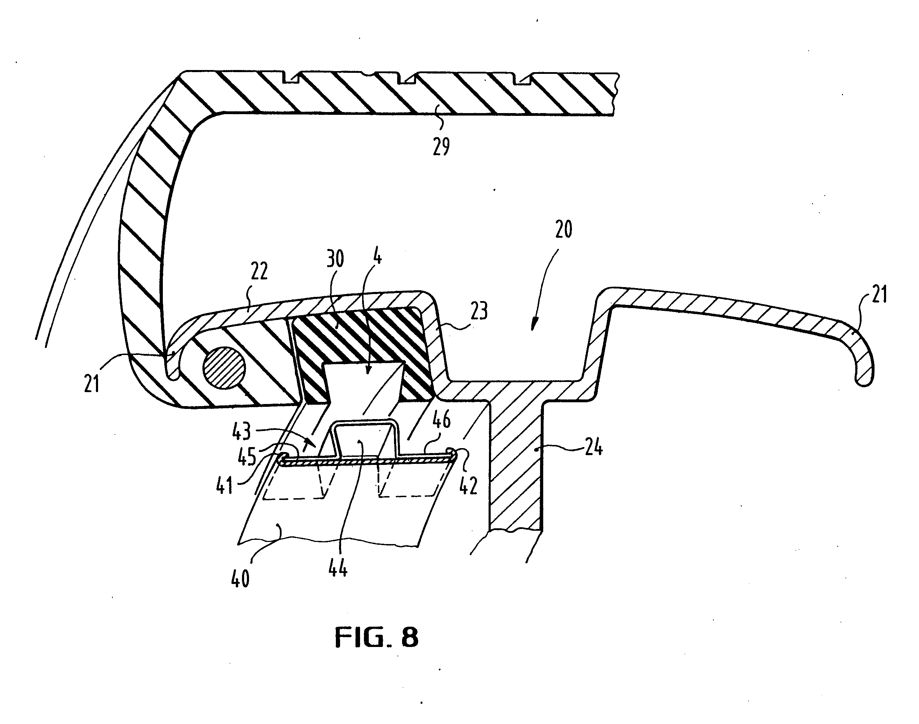

Nach einem wichtigen Gesichtspunkt der vorliegenden Erfindung ist eine Abdeckung vorhanden, welche die Nut 4 am Füllring 30 und die ggf. darin befindlichen Ausgleichsgewichte abdeckt. Im Einzelfall kann es sich bei dieser Abdeckung um das Deckelteil 39 eines aufklappbaren Füllringes 30 handeln. Alternativ kann die Abdeckung ein Abdeckstreifen 70 sein, der zusammen mit dem Füllring den Montageraum ausfüllt. Nach einer weiteren Alternative kann die Abdeckung ein Abdeckring 40 sein (vgl. Fig. 8, 9a, 9b und 10), welcher den Montageraum einschließlich des darin befindlichen Füllringes 30 abdeckt und ggf. auch noch Abschnitte des Reifens 25 einschließlich des Reifenwulstes und/oder des Tiefbettes der Sicherheitsfelge 20 überdeckt. Ein solcher Abdeckring 40 kann aus Metall, insbesondere aus Leichtmetall bestehen, oder der Abdeckring kann aus Kunststoff bestehen und wenigstens an seiner sichtbaren Rückseite mit einer Metallisierung versehen sein.

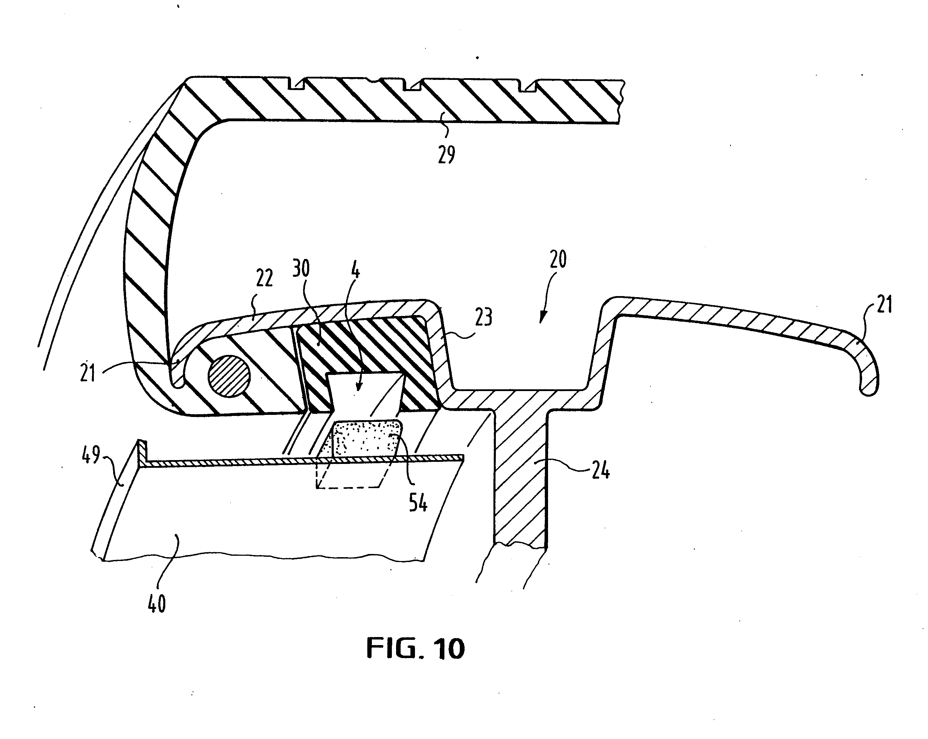

Aufgrund seiner Größe und/oder Gestalt kann der metallisch wirkende Abdeckring 40 zum Felgendesign beitragen. Beispielsweise kann ein solcher Abdeckring 40 das Aussehen der vorliegenden Sicherheitsfelge 20 an das Aussehen herkömmlicher Felgen, insbesondere herkömmlicher Zierfelgen, annähern. Hierzu kann am Außenumfang eines Abdeckringes 40 ein im wesentlichen vertikal abstehender Flansch 49 angeformt sein, der -in Einbaulage -den Reifenwulst 27 verbirgt (vgl. Fig. 10).

Zur Halterung des Abdeckringes dienen vorzugsweise Klemmelemente, welche mit einem Klemmabschnitt in die Nut 4 am Füllring 30 eingreifen und dort kraftschlüssig festgelegt sind. Die Klemmelemente am Abdeckring 40 können in verschiedener Weise ausgebildet werden. Beispielsweise können diese Klemmelemente als Haft-und Klemmabschnitt 44 eines Federbügels 43 oder als elastisch-verformbarer Formkörper 54 oder als Stanzfalten 47 oder als Ausstan zungen 48, ausgebildet sein. Beispielhafte Ausgestaltungen dieser Klemmelemente ergeben sich aus den Abbildungen.

Wie aus Fig.8 ersichtlich, können an einer Hauptfläche eines im wesentlichen ebenen Abdeckringes 40 in regelmässigen Abständen zueinander um den Ring herum verteilt eine Anzahl federnder Klemmelemente angeformt oder angebracht sein, die mittelbar über den Füllring 30 an der Radfelge 20 festlegbar sind. Beispielsweise können diese Klemmelemente als Federbügel 43 aus Federstahl oder einem anderen elastischen Material ausgebildet sein, deren gegenüber liegende Endabschnitte 45 und 46 sich in je einer Hohlkehle abstützen, die von den umgebogenen Längsrändern 41 und 42 der Abdeckung gebildet werden. Jeder Federbügel 43 weist einen einstückig angeformten Klemm-oder Haftabschnitt 44 auf, der eine an das Profil der Nut 4 im Füllring 30 angepaßte Form besitzt und innerhalb dieser Nut 4 federnd festlegbar ist.

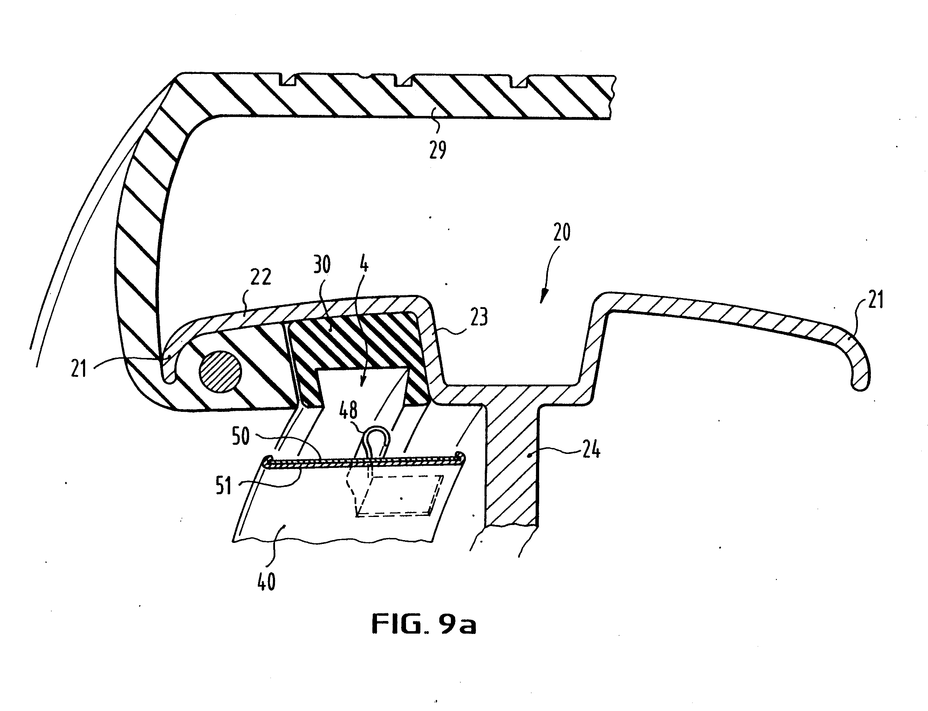

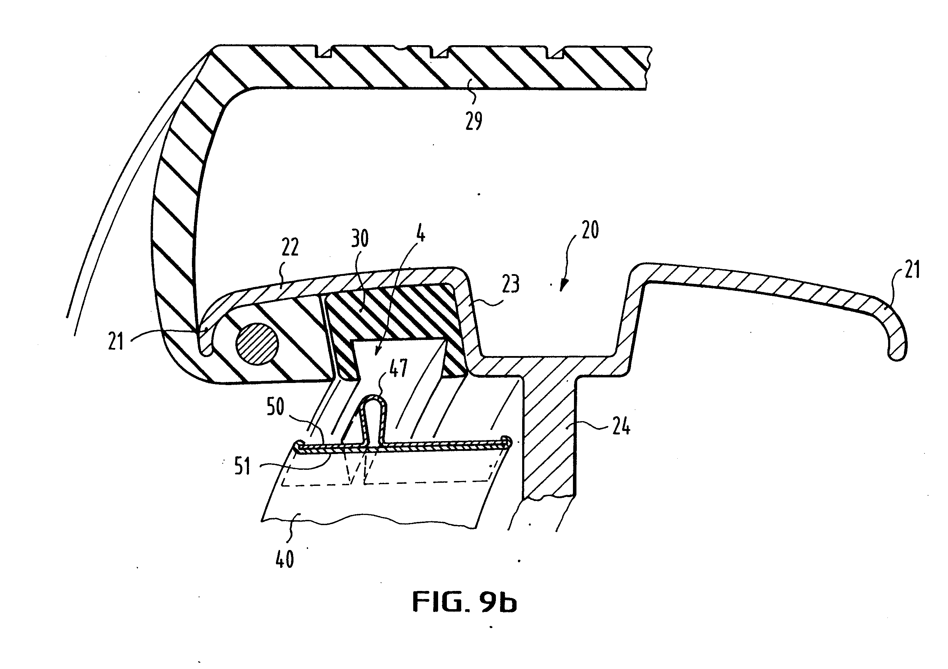

Anstelle zusätzlicher Federbügel kann ein Abdeckring 40, der in diesem Falle zweckmäßigerweise aus dünnem Blech besteht, in regelmäßigen Abständen Stanzfalten 47 oder Ausstanzungen 48 aufweisen, welche -in Einbaulage -in die Nut 4 im Füllring 30 eingreifen (vgl. Fig. 9a und 9b). In einem solchen Falle ist der Abdeckring 40 vorteilhafterweise als zwei-oder mehrschichtiges Laminat ausgebildet, und die innere Schicht 50 (oder die inneren Schichten) bilden die Stanzfalten 47 oder die Ausstanzungen 48. Die innere(n) Schicht(en) 50 ist/sind mit wenigstens einer ununterbrochenen Deckschicht 51 belegt, welche den optisch ansprechenden Eindruck einer Sichtblende gewährleisten.

Ein Abdeckring 40 dieser Art besteht vorzugsweise aus metallischem Material, beispielsweise aus dem Material der Felge oder aus Leichtmetall, wie beispielsweise Aluminium. Je nach Anwendungsfall beträgt die Breite eines solchen Abdeckringes 40 etwa 10 bis 80 mm, vorzugsweise etwa 12 bis 50 mm.

Nach einer weiteren Alternative können an der nach innen auf die Felge zu gerichteten Hauptfläche eines Abdeckringes 40 Klemmelemente in Form von Formstücken 54 aus Gummi oder einem anderen elastischen Material angebracht sein, wie das in Fig. 10 dargestellt ist. Das Querschnittsprofil dieser Formstücke 54 ist an den Querschnitt der Nut 4 im Füllring 30 angepaßt. Wie schematisch in Fig.10 angedeutet, weisen diese Formstücke 54 ein das Querschnittsprofil der Nut 4 geringfügig übersteigendes Profil auf, und zum Festklemmen des Abdeckringes 40 an der Radfelge 20 werden diese Formstücke 54 unter elastischer Verformung in die Nut 4 hineingedrückt.

Die elastischen Formkörper 54, 74 können einstückig am Abdeckring 40 bzw. am Abdeckstreifen 70 angeformt sein. Sowohl der Abdeckring 40 oder der Abdeckstreifen 70 wie die Formkörper 54 bzw. 74 können aus elastischem Material wie Gummi oder Kunststoff, insbesondere aus dem Material des Füllringes 30 bestehen. Bei Bedarf kann in den aus elastischem Material bestehenden Abdeckring 40 oder Abdeckstreifen 70 ein Verstärkungsmittel, etwa in Form von Drähten aus Metall oder hochfestem Kunststoff eingebettet sein. An der Abdeckung 70 können Dichtlippen 76 angeformt sein, um gemeinsam mit dem Abdeckstreifen 70 den Montageraum abzudichten. Auf diese Weise wird das Eindringen von Schmutz und Wasser in den Montageraum zusätzlich erschwert. Die Rückseite 72, d.h. die Sichtseite des Abdeckstreifens 70 kann metallisiert oder in sonstiger Weise an das Aussehen der Sicherheitsfelge 20 angepaßt sein, so daß der in dem Montageraum eingesetzte Abdeckstreifen praktisch nicht zu erkennen ist.

Wie dargelegt, schafft die Erfindung eine "unsichtbare" Ausgleichsgewicht-Befestigung an einem modernen Sicher heitsrad mit verbesserten Notlaufeigenschaften. An dem dort notwendigerweise vorgesehenen Füllring ist eine Nut ausgespart oder angeformt, in welche sich herkömmliche Ausgleichsgewichte einsetzen lassen, die keine eigenständigen Befestigungsmittel aufweisen. Die Erfindung erlaubt eine schnelle Beseitigung einer Unwucht, obwohl keine Felgenhörner zur Anbringung herkömmlicher Ausgleichsgewichte zugänglich sind. Die zusätzliche Abdeckung verhindert einen Verlust oder ein Verrutschen der Ausgleichsgewichte, vermeidet die Ablagerung von Schmutz und schafft eine praktisch "unsichtbare", in das Felgendesign integrierte Ausgleichsgewicht-Befestigung.

## Ansprüche

1. Ausgleichsgewicht-Befestigung an einem luftbereiften Fahrzeugrad mit einem Luftreifen mit zug-und druckfesten Kernen in den Reifenwülsten, ferner mit einer starren Felge, die radial nach innen ragende Felgenhörner und daran angrenzend am Felgeninnenumfang Sitzflächen zur Anlage der Reifenwülste aufweist, ferner mit je einem lösbaren Füllring innerhalb eines von der Reifenwulstwand und angrenzenden Felgenteilen begrenzten Montageraums, und mit Befestigungsmitteln am Füllring zur Anbringung von Ausgleichsgewichten, dadurch gekennzeichnet, daß als Befestigungsmittel eine am Füllring (30) ausgesparte oder angeformte Nut (4) zur Aufnahme herkömmlicher Ausgleichsgewichte (1,2) aus Blei, einer Bleilegierung oder dergleichen dient; und eine Abdeckung (39,40,70) für diese Nut (4) vorhanden ist.

2. Ausgleichsgewicht-Befestigung nach Anspruch 1, dadurch gekennzeichnet, daß der Füllring (30) teilweise eingeschnitten ist, wobei ein weiterhin mit dem restlichen Füllring-Abschnitt (35) einstückig verbundenes, jedoch aufklappbares Deckelteil (39) geschaffen wird; in diesem Deckelteil (39) oder in diesem Füllring-Abschnitt (35) die Nut (4) ausgebildet ist, und das Deckelteil (39) als Abdeckung für die Nut (4) und die gegebenenfalls darin befindlichen Ausgleichsgewichte (1,2) dient.

3. Ausgleichsgewicht-Befestigung nach Anspruch 1, dadurch gekennzeichnet, daß die Abdeckung ein vom Füllring (30) unabhängiger Abdeckring (40, 70) ist.

4. Ausgleichsgewicht-Befestigung nach einem der Ansprüche bis 3, dadurch gekennzeichnet, daß der Füllring (30) aus einem Hohlkammerprofil besteht.

5. Ausgleichsgewicht-Befestigung nach einem der Ansprüche 1 bis 4, dadurch gekennzeichnet, daß der Füllring (30) aus einem vergleichsweise harten, formstabilen Material besteht, an dem sich eine umlaufende Aussparung (34) befindet, in welche ein Profilkörper (13) aus einem weicheren, elastisch verformbaren Material eingesetzt ist, an welchem die Nut (4) zur Aufnahme der Ausgleichsgewichte ausgespart ist.

6. Ausgleichsgewicht-Befestigung nach einem der Ansprüche 3 bis 5, dadurch gekennzeichnet, daß der Füllring (30) den Montageraum nur teilweise ausfüllt; und der Abdeckring (70) zumindest mit Teilen seines Querschnittes ebenfalls innerhalb des Montageraums angeordnet ist.

7. Ausgleichsgewicht-Befestigung nach einem der Ansprüche 1 bis 5, dadurch gekennzeichnet, daß der Füllring (30) den Montageraum vollständig ausfüllt.

8. Ausgleichsgewicht-Befestigung nach einem der Ansprüche 3 bis 7, dadurch gekennzeichnet, daß am Abdeckring (40, 70) Klemmelemente zum formschlüssigen Eingriff in die Nut (4) angebracht oder angeformt sind.

9. Ausgleichsgewicht-Befestigung nach Anspruch 8, dadurch gekennzeichnet, daß als Klemmelemente Federbügel (43) Stanzfalten (47), Ausstanzungen (48) oder komprimierbare Formkörper (54, 74) dienen, die innerhalb der Nut (4) festlegbar sind.

10. Ausgleichsgewicht-Befestigung nach Anspruch 1 oder 2, dadurch gekennzeichnet, daß der Füllring (30) im wesentlichen quaderförmigen Querschnitt aufweist.

11. Ausgleichsgewicht-Befestigung nach Anspruch 10, dadurch gekennzeichnet, daß der Füllring (30) im Querschnitt eine Höhe von 10 bis 50 mm und eine Breite von 10 bis 50 mm aufweist.

12. Ausgleichsgewicht-Befestigung nach Anspruch 1 oder 2, dadurch gekennzeichnet, daß der Füllring (30) im wesentlichen dreieckigen Querschnitt aufweist; und der Abdeckring (70) einen daran angepaßten Querschnitt aufweist.

13. Ausgleichsgewicht-Befestigung nach einem der Ansprüche 1 bis 12, dadurch gekennzeichnet, daß in den Füllring (30) und/oder in die Abdeckungen (40, 70) Versteifungen eingearbeitet sind.

14. Ausgleichsgewicht-Befestigung nach einem der Ansprüche 1 bis 13, dadurch gekennzeichnet, daß der Querschnitt der Nut (4) an die Abmessungen herkömmlicher Ausgleichsgewichte (1, 2) angepaßt ist, um diese im Klemmsitz innerhalb der Nut (4) festzuhalten.

15. Ausgleichsgewicht-Befestigung nach Anspruch 14,
dadurch gekennzeichnet, daß
der Querschnitt der Nut (4) sich in Richtung auf die Nutöffnung (7) zu verjüngt.

16. Ausgleichsgewicht-Befestigung nach Anspruch 15,
dadurch gekennzeichnet, daß
der Nut-Querschnitt schwalbenschwanzförmig ist.

17. Ausgleichsgewicht-Befestigung nach Anspruch 15,
dadurch gekennzeichnet, daß
der Nut-Querschnitt einem angeschnittenen Kreis entspricht.

18. Ausgleichsgewicht-Befestigung nach einem der Ansprüche 15 bis 17,
dadurch gekennzeichnet, daß
die Nutöffnung (7) zusätzlich durch einen oder mehrere dort angebrachte Wülste (8) verengt ist.

19. Ausgleichsgewicht-Befestigung nach einem der Ansprüche 3 bis 18,
dadurch gekennzeichnet, daß
der Abdeckring (40) aus Metall oder aus metallisiertem Kunststoff besteht und mit seiner Größe und/oder Gestalt zum Felgendesign beiträgt, um das Aussehen dieser Spezialfelge an das Aussehen herkömmlicher Felgen, insbesondere herkömmlicher Zierfelgen, anzunähern.

20. Ausgleichsgewicht-Befestigung nach Anspruch 19,
dadurch gekennzeichnet, daß
am Außenumfang des Abdeckringes (40) ein im wesentlichen vertikal abstehender, umlaufender Flansch (49) angeformt ist.

21. Ein Füllring für eine Ausgleichsgewicht-Befestigung nach einem der Ansprüche 1 bis 20, der in den von einer Reifenwulstwand und angrenzenden Felgenteilen begrenzten Montageraum an einer starren Felge lösbar einsetzbar ist, die radial nach innen ragende Felgenhörner und daran angrenzend am Felgeninnenumfang Sitzflächen zur Anlage der Reifenwülste aufweist,
dadurch gekennzeichnet, daß
am Füllring (30) eine Nut (4) zur Aufnahme herkömmlicher Ausgleichsgewichte (1,2) aus Blei, einer Bleilegierung oder dergleichen ausgespart oder angeformt ist.

22. Der Füllring nach Anspruch 21,
dadurch gekennzeichnet, daß
der Füllring (30) aus einem Hohlkammerprofil besteht, dessen Umfangswand (36) einen Einschnitt aufweist, wobei ein weiterhin mit dem restlichen Füllring-Abschnitt (35) einstückig verbundenes, jedoch aufklappbares Deckelteil (39) geschaffen wird; und
die Nut (4) in diesem Deckelteil (39) (vgl. Fig. 2a, 2b) oder in diesem restlichen Füllring-Abschnitt (35) (vgl. Fig. 2c) ausgebildet ist.

FIG. 1a

FIG. 1b

FIG. 1c

FIG. 2a

**FIG. 2b**

**FIG. 2c**

FIG. 3a

FIG. 3b

FIG. 4a

FIG. 4b

FIG. 5a

FIG. 5b

FIG. 6

0 222 391

FIG. 7

0 222 391

FIG. 8

FIG. 9a

0 222 391

FIG. 9b

0 222 391

**FIG. 10**

0 222 391

## EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 139 905 (CONTINENTAL) <br> * Seite 7, Zeilen 19-23; Figur 4 * | 1 | B 60 B 13/00 <br> B 60 B 7/00 <br> F 16 F 15/32 |
| A | PATENTS ABSTRACTS OF JAPAN, Band 9, Nr. 128 (M-384)[1851], 4. Juni 1985; & JP-A-60 12 311 (HASHIMOTO FORMING KOGYO K.K.) 22-01-1985 <br> * Zusammenfassung; Figuren 1-3 * | 1,19 | |
| A | FR-A-1 114 880 (PILLONS) <br> * Seite 1, rechte Spalte, Zeile 25 - Seite 2, linke Spalte, Zeile 18; Figuren 2-6 * | 1 | |
| A | US-A-2 237 501 (PURVIS) <br> * Seite 1, rechte Spalte, Zeilen 46-50; Figur 1 * | 1 | RECHERCHIERTE SACHGEBIETE (Int. Cl.4) <br><br> B 60 B <br> B 60 C <br> F 16 F |
| A | US-A-3 427 076 (COLE) <br> * Spalte 2, Zeilen 51-60; Spalte 4, Zeilen 1-10; Figuren 1,3,6 * | 1 | |
| P,X | DE-U-8 601 521 (THISSEN) <br><br> * Seite 14, Zeilen 15-21; Seite 15, Zeilen 1-32; Seite 17, Zeile 10 - Seite 18, Zeile 12; Figuren 3a,3b,5,6 * | 1,3-12 ,14-17 ,21 | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 05-02-1987 | AYITER I. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | EP-A-0 177 773 (THISSEN)<br><br>* Seite 12, Zeile 29 - Seite 13, Zeile 4; Seite 14, Zeile 21 - Seite 15, Zeile 2; Seite 15, Zeile 36 - Seite 16, Zeile 33; Figuren 1-6c * | 1,2,3, 8,9,14 ,15,19 -21 | |

-----

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 05-02-1987 | AYITER I. |